# EUROPÄISCHE PATENTSCHRIFT

(11) **EP 1 064 239 B1**
(45) Veröffentlichungstag und Bekanntmachung des Hinweises auf die Patenterteilung: **31.07.2002**
(21) Anmeldenummer: 99915638.3
(22) Anmeldetag: 17.03.1999
(51) Int. Cl.: C04B 41/48, C09D 133/02, C09D 133/04, C09B 67/20

(54) **DISPERSIONEN ZUR HERSTELLUNG VON DACHSTEINFARBEN, DACHSTEINFARBEN SOWIE MIT DACHSTEINFARBEN BESCHICHTETE DACHSTEINE**
DISPERSIONS FOR PRODUCING PAINT FOR CONCRETE ROOF TILES, PAINT FOR CONCRETE ROOF TILES AND CONCRETE ROOF TILES COATED WITH SUCH PAINT
DISPERSIONS DESTINEES A LA PREPARATION DE PEINTURES POUR TUILES EN BETON, PEINTURES POUR TUILES EN BETON ET TUILES EN BETON RECOUVERTES DESDITES PEINTURES

(30) Priorität: 20.03.1998 DE 19812143
(43) Veröffentlichungstag der Anmeldung: 03.01.2001
(73) Patentinhaber: Clariant GmbH, 65929 Frankfurt am Main (DE)
(72) Erfinder: KRIEGER, Stefan, D-65719 Hofheim (DE); ZIMMERSCHIED, Klaus, D-65205 Wiesbaden (DE); LUPPRICH, Erhard, D-65929 Frankfurt am Main (DE)
(86) Internationale Anmeldenummer: EP9901746
(87) Internationale Veröffentlichungsnummer: WO9948841

(56) Entgegenhaltungen:
- EP-A- 0 383 002
- EP-A- 0 469 295
- EP-A- 0 492 210
- EP-A- 0 630 920
- EP-A- 0 694 577
- EP-A- 0 773 245
- WO-A-92/00335
- DD-A- 124 808
- DATABASE WPI Week 9230 Derwent Publications Ltd., London, GB; AN 92-083678 XP002108590 N. HIROYUKI ET. AL.: "Low viscosity sodium carboxymethyl cellulose" & JP 04 025502 A (DAICEL CHEM. IND. LTD.; NICHIRIN KAGAKU KOGYO KK), 29. Januar 1992 (1992-01-29)
- DATABASE WPI Week 8637 Derwent Publications Ltd., London, GB; AN 86-243502 XP002108591 M. MOTOYASU ET. AL.: "Adhesive vinyl acetate resin emulsion" & JP 61 174279 A (AIKA KOGYO KK), 5. August 1986 (1986-08-05)

## Beschreibung

Die vorliegende Erfindung betrifft Dispersionen zur Herstellung von Dachsteinfarben, Dachsteinfarben sowie mit Dachsteinfarben beschichtete Dachsteine.

Bei der Herstellung von Betondachsteinen wird eine Mörtelmasse nach der Formgebung in der Regel meist vor der Härtung zur Farbgebung mit einer Dispersionsfarbe beschichtet. Die anschließende Härtung erfolgt dann zusammen mit der Trocknung der Farbe bei Temperaturen von 40 bis 100°C. Nach der Härtung kann noch eine zweite Beschichtung mit einer Dispersionsfarbe oder einem Klarlack und anschließender Trocknung erfolgen.

Damit die Farbe auf dem ungehärteten Beton, der als grüner Beton bezeichnet wird, nicht koaguliert, wird von dem Bindemittel eine gewisse Stabilität, wie Zementverträglichkeit und erhöhte Salzstabilität, gefordert. Dies wird in der Regel durch Verwendung von ionischen und/oder nichtionischen Emulgatoren, sowie durch Einsatz von funktionellen Monomeren, wie z.B. Methacrylsäure, Acrylsäure, Maleinsäure, Acrylamid, Methacrylamid, Ethensulfonat und/oder Sulfoxyethylmethacrylat, erreicht. Neben der Farbgebung hat die Dispersionsfarbe die Aufgabe, bei der Härtung der Betondachsteine Kalkausblühungen zu verhindern. Eine weitere Aufgabe ist es, die Anschmutzung und insbesondere den Algenbewuchs auf den fertigen Dachsteinen zu verhindern bzw. zu reduzieren.

Die Verwendung von Dispersionen auf Basis von (Meth)acrylsäureestern und/oder Styrol zur Herstellung von Dachsteinfarben ist schon aus der DD 124808 bekannt. In der EP-A-0 492 210 wird die Verwendung von bestimmten Monomeren zur Reduzierung der Anschmutzneigung des Betondachsteins beschrieben. Zur Verringerung von Kalkausblühunngen wird in der EP-A-0 469 295 die Verwendung von Emulgatoren auf Basis von sulfonierten Diarylethern beansprucht.

Die Dispersionen enthalten zur Stabilisierung hydrophile Bestandteile, wie Emulgatoren und funktionelle Monomere wie z.B. Methacrylsäure, Acrylsäure, Maleinsäure, Acrylamid, Methacrylamid, Ethensulfonat oder Sulfoxyethylmethacrylat. Durch die hydrophilen Bestandteile ergibt sich eine erhöhte Wasseraufnahme der entsprechenden Farbfilme, was zu einem erhöhten Algenbewuchs der Betondachsteine und bei Frost-/Tau-Wechseln zu Rißbildungen und Abplatzen der Farbe aufgrund des aufgenommenen Wassers führen kann.

Zur Verhinderung des Algenbewuchses wird in der DE-A-39 01 073 die Verwendung von einpolymerisierbaren Zinnverbindungen beschrieben. Dies ist jedoch ebenso wie die nachträgliche Zugabe von Algiziden aus ökologischer Sicht bedenklich.

In der EP-A-0 694 577 wird eine Mischung offenbart, enthaltend
A) ein Copolymerisat, im wesentlichen aufgebaut aus
   a) 30 bis 99,99 Gew.-% Hauptmonomeren ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen,
   b) 0,01 bis 5 Gew.-% hydrolisierbaren Siliciumverbindungen
   c) 0 bis 69,99 Gew.-% von a) und b) verschiedenen Monomeren, wobei der Anteil von Monomeren mit Carbonsäuregruppen unter 5 Gew.-%, bezogen auf das Copolymerisat beträgt, sich die Gewichtsangaben auf das Copolymerisat beziehen und sich zu 100 Gew.-% addieren, und
B) ein Copolymerisat, welches zu mindestens 5 Gew.-% aus ethylenisch ungesättigten Monomeren, welche mindestens eine Carbonsäuregruppe enthalten, aufgebaut ist.

Die Mischung wird in Beschichtungs-, Dichtungsmassen oder Klebstoffen eingesetzt.

In der EP-A-0 773 245 wird eine wässrige Polymerisatdispersion offenbart, deren in disperser Verteilung befindliches Polymerisat in radikalisch polymerisierter Form aus
- 20 bis 65 Gew.-%: wenigstens eines vinylaromatischen Monomeren,
- 35 bis 80 Gew.-%: wenigstens eines zwei konjugierte ethylenisch ungesättigte Doppelbindungen aufweisenden Monomeren und
- 0 bis 10 Gew.-%: sonstigen wenigstens eine ethylenisch ungesättigte Doppelbindung aufweisenden Monomeren
aufgebaut ist und die einen reduzierten Gehalt an Alkalimetallionen aufweist sowie deren Verwendung beispielsweise zur Herstellung von Wasserdampfsperren.

In der WO 92/00335 werden Copolymer-Emulsionen mit einem Feststoffgehalt von 20 bis 70 Gew.-%, die durch Schutzkolloide, wie z.B. Carboxymethylcellulose, stabilisiert sind, offenbart, wobei die Copolymere mindestes 90 Gew.-% C₁-C₁₀-Alkyl(meth)acrylate als Monomere aufweisen, um zu einer Glastemperatur im Bereich von 0 bis 60°C zu gelangen. Die Copolymer-Emulsionen finden Anwendung als Leim für Glasfasern.

In der JP-A-04 025 502 werden niederviskose Natriumcarboxymethylcellulosen offenbart, mit einem Substitutionsgrad an Carboxymethylgruppen von mindestens 1 offenbart. Diese Carboxymethylcellulosen finden beispielsweise Verwendung in Pharmazeutika, in Nahrungsmitteln und in Kosmetika, als Schutzkolloid in Druckfarben, als Schutzfilm für Ablichtungen sowie als Verstärkungsmaterial für Papier.

Es wurde nun überraschenderweise gefunden, dass durch Verwendung von Carboxymethylcellulose als Schutzkolloid Dispersionen hergestellt werden können, die als Bindemittel in Dachsteinfarben eine hinreichende Zementstabilität aufweisen und dennoch eine geringe Wasseraufnahme im Farbfilm zeigen, was zu einem geringeren Algenbewuchs, einer besseren Frost-/Tau-Stabilität der Beschichtung und zu einem verbesserten Ausblühschutz führt.

Ein Gegenstand der vorliegenden Erfindung ist die Verwendung einer Dispersion zur Herstellung von Dachsteinfarben, die unter Verwendung von 0,1 bis 3, vorzugsweise 0,1 bis 1,5, Gewichtsprozent (bezogen auf den Monomer-Gesamtgehalt) an Carboxymethylcellulose als Schutzkolloid hergestellt wird, wobei man eine Monomerzusammensetzung bestehend aus
a) 85 bis 99,8 Gew.-% Acrylsäureester mit C₁ bis C₁₂ Alkanolen, Methacrylsäureester mit C₁ bis C₁₂ Alkanolen und/oder vinylaromatischen Monomeren,
b) 0,2 bis 5 Gew.-% copolymerisierbaren Carbonsäuren, Carbonsäureamiden, Sulfaten und/oder Sulfonaten und
c) 0 bis 10 Gew.-% sonstigen Monomeren
in Form einer wäßrigen Emulsion polymerisiert.

Als Carboxymethylcellulose werden vorzugsweise wasserlösliche Carboxymethylcellulosen mit einem Substitutionsgrad von 0,4 bis 2,9, besonders bevorzugt 0,4 bis 1,5 und insbesondere von 0,6 bis 1,4 verwendet, wobei unter Substitutionsgrad die durchschnittliche Anzahl der pro Anhydroglukoseeinheit eingeführten Carboxymethylgruppen verstanden wird. Es werden vorzugsweise Carboxymethylcellulosen verwendet, deren 2 %ige wäßrige Lösungen eine Brookfieldviskosität (20 U/Min) bei 25°C von unter 2000 (mit Spindel 3), besonders bevorzugt unter 500 (mit Spindel 2) insbesondere unter 100 (mit Spindel 1) mPa·s besitzen. Die Carboxymethylcellulose wird bevorzugt in Form ihres Ammoniumoder Alkalisalzes eingesetzt. Geeignete kommerzielle Produkte sind z.B. Blanose 7M®, Blanose 7UL®, Blanose 7EL® und Ambergum 3021® der Firma Aqualon. Die erfindungsgemäßen Carboxymethylcellulosen enthalten gegebenenfalls noch weitere Substituenten, insbesondere Alkyl- oder Hydroxyalkylreste mit 1 bis 4 Kohlenstoffatomen, Alkyloxyalkylreste mit 2 bis 6 Kohlenstoffatomen oder Dialkylaminoreste mit insgesamt 2 bis 6 Kohlenstoffatomen. Geeignete Verbindungen sind beispielsweise Methylcarboxymethylcellulose, Ethylcarboxymethylcellulose, Hydroxyethylcarboxymethylcellulose, Hydroxypropylcarboxymethylcellulose, Methoxyethylcarboxymethylcellulose, Ethoxyethylcarboxymethylcellulose und Diethylaminocarboxymethylcellulose.

Als Monomere a) werden Acryl- und Methacrylsäureester von C₁ bis C₁₂ Monoalkoholen wie z.B. Ethylacrylat, Butylacrylat, n-Octylacrylat, 2-Ethylhexylacrylat, Methylmethacrylat, Butylmethacrylat, Cyclohexylmethacrylat, Isobornylmethacrylat, und/oder vinylaromatische Monomere wie z.B. Styrol oder Vinyltoluol verwendet. Es werden solche dem Fachmann bekannten Kombinationen von weichmachenden Monomeren, wie z.B. Butylacrylat und 2-Ethylhexylacrylat mit hartmachenden Monomeren, wie z.B. Methylmethacrylat und Styrol, verwendet, so daß die Glastemperatur des entsprechenden Copolymers vorzugsweise im Bereich von -10 bis 60°C, besonders bevorzugt im Bereich von -5 bis 50°C und insbesondere im Bereich von 0 bis 40°C liegt.

Wird nach dem Verfahren der Mehrstufenemulsionspolymerisation gearbeitet, sollten die hartmachenden und weichmachenden Monomere und das Verhältnis der Phasen vorzugsweise so kombiniert werden, daß die Dispersion eine Mindestfilmbildetemperatur im Bereich von 0 bis 50°C besitzt und die entsprechenden Dispersionsfilme bei einer Filmdicke von 100 µm eine Reißdehnung von größer 150 % besitzen.

An copolymerisierbaren Carbonsäuren, Carbonsäureamiden, Sulfaten und/oder Sulfonaten b) werden vorzugsweise Acrylsäure, Methacrylsäure, Itaconsäure, Acrylamid, Methacrylamid, Sulfoalkyl(meth)acrylate, wie z.B. das Kaliumsalz von Sulfopropylmethacrylat (= SPM der Firma Roschig) und/oder Sulfoalkyl(meth)-acrylamide, wie z.B. das Natriumsalz der Acrylamido-2-methyl-propansulfonsäure (= AMPS der Firma Lubrizol) verwendet.

Als sonstige Monomeren c) können ketogruppenhaltige Monomere, wie z.B. acetoacetoxygruppenhaltige Monomere, z.B. Acetoacetoxyethylmethacrylat, Acetoacetoxybutylmethacrylat, Acrylamidomethylacetylaceton und Acetessigsäurevinylester und polymerisierbare Derivate des Diacetons, wie Diacetonacrylamid und Diacetonmethacrylamid verwendet werden. Desweiteren können als Monomere c) Hydroxyalkyl(meth)acrylate, Glycidyl(meth)acrylate, Alkoxyvinylsilane, (Meth)acryloyloxyalkylsilane, (Meth)acryloyloxyalkylphospate und polymerisierbare Ethylenharnstoffderivate, wie z.B. N-(β-(Meth)acryloxyethyl)-N,N'-ethylenharnstoff und N-(β-Acrylamidoethyl)-N,N'-ethylenharnstoff verwendet werden.

Zur Verbesserung des Anschmutzverhaltens können Dispersionen, die als sonstige Monomere c) ketogruppenhaltige Monomere enthalten, mit polyfunktionellen Carbonsäurehydraziden versetzt werden, die mindestens zwei Hydrazidgruppen, wie beispielsweise Adipinsäuredihydrazid, Oxalsäuredihydrazid, Isophthalsäuredihydrazid und Polyacrylsäurepolyhydrazid, enthalten. Vorzugsweise wird ein äquimolares Verhältnis an Hydrazidgruppen zu Ketogruppen verwendet.

Die Polymerisation wird nach den gängigen Verfahren der Emulsionspolymerisation durchgeführt, in dem die Monomeren in der wäßrigen Phase in Gegenwart von Emulgatoren, Initiatoren und des Schutzkolloids emulgiert und bei Temperaturen von 60 bis 95°C polymerisiert werden. Die Emulsionspolymerisation kann nach den gängigen, dem Fachmann bekannten Verfahren, wie Batch-, Monomerendosier- oder Emulsions-Zulaufverfahren durchgeführt werden. Vorzugsweise wird nach dem Emulsions-Zulaufverfahren gearbeitet, bei dem eine kleine Menge der Monomeren vorpolymerisiert wird und anschließend die verbleibende Menge an Monomeren in Form einer wäßrigen Emulsion zudosiert wird. Gegebenenfalls können auch mehrere verschiedene Monomerenemulsionen nacheinander zudosiert werden. Das Schutzkolloid kann wie der Emulgator zum Teil im Reaktor vorgelegt werden und/oder mit der Monomerenemulsion zudosiert werden.

Ein wesentlicher Aspekt ist, daß die Polymerisation bei einem pH-Wert >3, vorzugsweise >5, besonders bevorzugt im Bereich von pH 5 bis 8 durchgeführt wird. Dazu wird die Monomerenemulsion, die das Schutzkolloid sowie die copolymerisierbaren Carbonsäuren, Carbonsäureamide, Sulfate und/oder Sulfonate b) enthält und/oder die Reaktorvorlage mit einer wäßrigen Ammoniak-, Alkali- und/oder Erdalkalihydroxidlösung auf einen pH-Wert >3, vorzugsweise >5, besonders bevorzugt auf einen pH-Wert im Bereich von pH 5 bis 8 eingestellt. Altemativ ist auch die Verwendung eines entsprechenden Puffers möglich.

Die Herstellung von hochwertigen Dispersionen gemäß der vorliegenden Erfindung setzt die Anwendung der auf dem Gebiet der Emulsionspolymerisation bestehenden Erfahrungen, auch soweit sie hier nicht beschrieben sind, voraus. Die Mißachtung, der dem Fachmann der Emulsionspolymerisation bekannten Regeln, kann daher wichtige Eigenschaften, z. B. die Wasserbeständigkeit der Dispersionsfilme beeinträchtigen. Die Dispersionen sollen deshalb bezogen auf den Gehalt an Polymerisat, die üblicherweise verwendeten Mengen von bis zu 3 Gew.-%, vorzugsweise bis zu 2 Gew.-%, an ionischen Emulgatoren bzw. bis zu 6 Gew.-%, vorzugsweise bis zu 4 Gew.-%, an nichtionischen Emulgatoren nicht wesentlich überschreiten.

Besonders bevorzugt werden nur ionische Emulgatoren, mit einer Menge von < 2 Gew.-% verwendet.

Als nichtionische Emulgatoren können beispielsweise Alkylpolyglykolether wie Ethoxylierungsprodukte von Lauryl-, Oleyl- oder Stearylalkohol oder von Gemischen wie Kokosfettalkohol; Alkylphenolpolyglykolether wie Ethoxylierungsprodukte von Octyl- oder Nonylphenol, Diisopropylphenol, Triisopropylphenol oder von Di- oder Tri-tert.-butylphenol; oder Ethoxylierungsprodukte von Polypropylenoxid verwendet werden.

Als ionische Emulgatoren kommen in erster Linie anionische Emulgatoren in Frage. Es kann sich dabei um die Alkali- oder Ammoniumsalze von Alkyl-, Aryloder Alkylaryl-sulfonaten, -sulfaten,- phosphaten, -phosphonaten oder Verbindungen mit anderen anionischen Endgruppen handeln, wobei sich auch Oligo- oder Polyethylenoxid-Einheiten zwischen dem Kohlenwasserstoffrest und der anionischen Gruppe befinden können. Typische Beispiele sind Natriumlaurylsulfat, Natriumundecylglykolethersulfat, Natriumlauryldiglykolsulfat, Natriumtetradecyltriglykolsulfat, Natriumoctylphenolglykolethersulfat, Natriumdodecylbenzolsulfonat, Natriumlauryldiglykolsulfat, Ammonium-tri-tert.-butylphenolpenta-oder oktaglykolsulfat.

Zum Starten und Weiterführen der Polymerisation bedient man sich öl- und/oder vorzugsweise wasserlöslicher Radikalbildner oder Redoxsysteme. Es eignen sich z.B. Wasserstoffperoxid, Kalium-, Natrium- oder Ammoniumperoxidisulfat, Dibenzoylperoxid, Laurylperoxid, Tri-tert.- butylperoxid, Bisazodiisobutyronitril, allein oder zusammen mit reduzierenden Komponenten, z. B. Natriumbisulfit. Rongalit, Glucose, Ascorbinsäure und andere reduzierend wirkende Verbindungen. Bevorzugt werden Peroxidisulfate verwendet.

Desweiteren können Regler, wie Mercaptane, insbesondere N-Dodecylmercaptan, Thiophenol und/oder 2-Methyl-5-tert.-Butylthiophenol, verwendet werden. Üblicherweise werden Mengen von 0 bis 1 Gew.-%, bevorzugt von 0 bis 0,5 Gew.-% eingesetzt und besonders bevorzugt wird die Dispersion ohne Verwendung eines Reglers hergestellt.

Darüber hinaus kann die Dispersion 0,1 bis 2 Gew.-% eines Dispergiermittels enthalten.

Die Dispersionen werden üblicherweise mit wäßrigen Ammoniak-, Alkali- und Erdalkalihydroxidlösungen auf einen pH-Wert von 6,5 bis 10, vorzugsweise von 7,0 bis 9,0 eingestellt.

Gegebenenfalls kann die Dispersion noch Filmbildehilfsmittel, wie Testbenzin, Texanol®, Butyldiglykol und Butyldipropylenglykol, Weichmacher, wie Dimethylphthalat, Dibutylphthalat Dispergiermittel wie Polyacrylsäuren und entsprechende Copolymere, wie z.B. Lopon 890®, Dispex G40®, Verdicker auf Basis von Polyacrylaten oder Polyurethanen wie Borchigel L75® und Tafigel PUR 40®, Konservierungsmittel, Entschäumer, wie z.B. Mineralöl- oder Silikonentschäumer, Netzmittel, wie Aminomethylpropanol und andere Additive, wie sie zur Formulierung von Beschichtungsmassen üblich sind, enthalten.

Die Dispersion ist zur Beschichtung von Dachsteinen, vorzugsweise von grünen Dachsteinen, geeignet. Geeignete Beschichtungsmassen werden in bekannter Weise durch Einarbeiten von anorganischen Füllstoffen und Farbpigmenten in die Dispersion hergestellt, wobei die gewünschte Viskosität der Farbe durch Zusatz von Wasser und/oder durch Verwendung von Verdickern eingestellt werden kann. Als anorganische Füllstoffe kommen z.B. Calcit, Kreide, Quarzmehl und/oder Schwerspat in Betracht. Als Pigmente eignen sich anorganische Pigmente wie z.B. Eisenoxid-Rot und Schwarz-Pigmente sowie organische Pigmente.

Die vorliegende Erfindung wird im folgenden anhand von Ausführungsbeispielen näher beschrieben, ohne dadurch jedoch beschränkt zu werden.

### Beispiel 1:

Zunächst wird eine Monomeremulsion hergestellt. Dazu wird eine Mischung aus

| | |
|---|---|
| 507,0 GT | Wasser, |
| 12,1 GT | Ambergum 3021®, |
| 39,3 GT | einer 38 %igen Lösung eines C₁₂ bis C₁₄ Alkylpolyglykolethersulfats mit ca. 3 Ethylenoxideinheiten und |
| 11,0 GT | Methacrylsäure |

mit einer 12,5 %igen Ammoniaklösung auf einen pH-Wert von 8 eingestellt und

| | |
|---|---|
| 572,0 GT | Methylmethacrylat, |
| 528,0 GT | Butylacrylat und |
| 2,75 GT | Ammoniumperoxodisulfat |

mit einem Schnellrührer eingerührt und so lange gerührt, bis eine stabile Emulsion entsteht. In einem geeigneten Reaktionsgefäß werden dann

| | |
|---|---|
| 522,5 GT | Wasser, |
| 8,65 GT | Ambergum 3021®, |
| 2,0 GT | einer 38 %igen Lösung eines C₁₂ bis C₁₄ Alkylpolyglykolethersulfats mit ca. 3 Ethylenoxideinheiten und |
| 66,0 GT | der Monomerenemulsion |

auf 80°C erhitzt und mit einer Lösung von 0,55 GT Ammoniumperoxodisulfat in 15 GT Wasser versetzt. Anschließend wird innerhalb von 3,5 Stunden die verbleibende Monomerenemulsion zudosiert. Es wird noch 60 Minuten weiter geheizt und dann abgekühlt. Der pH-Wert wird mit einer 12,5 % igen Ammoniaklösung auf 9,0 eingestellt. Der Feststoffgehalt der Dispersion beträgt 48,8 Gew.-% und die MFT 12°C.

### Beispiel 2

Zunächst wird eine Monomeremulsion hergestellt. Dazu wird eine Mischung aus

| | |
|---|---|
| 508,2 GT | Wasser, |
| 17,3 GT | Ambergum 3021®, |
| 39,3 GT | einer 38%igen Lösung eines C₁₁ Alkylpolyglykolethersulfats mit ca. 7 Ethylenoxideinheiten, |
| 11,0 GT | Methacrylsäure und |
| 5,5 GT | Acrylsäure |

mit einer 12,5 %igen Ammoniaklösung auf einen pH-Wert von 8 eingestellt und

| | |
|---|---|
| 572,0 GT | Methylmethacrylat, |
| 528,0 GT | Butylacrylat und |
| 2,75 GT | Ammoniumperoxodisulfat |

mit einem Schnellrührer eingerührt und so lange gerührt, bis eine stabile Emulsion entsteht. In einem geeigneten Reaktionsgefäß werden dann

| | |
|---|---|
| 522,5 GT | Wasser, |
| 12,0 GT | Ambergum 3021®, |
| 4,0 GT | einer 28 %igen Lösung eines C₁₁ Alkylpolyglykolethersulfats mit ca. 7 Ethylenoxideinheiten und |
| 66,0 GT | der Monomerenemulsion |

auf 80°C erhitzt und mit einer Lösung von 0,55 GT Ammoniumperoxodisulfat in 15 GT Wasser versetzt. Anschließend wird innerhalb von 3,5 Stunden die verbleibende Monomerenemulsion zudosiert. Es wird noch 60 Minuten weiter geheizt und dann abgekühlt. Der pH-Wert wird mit einer 12,5 % igen Ammoniaklösung auf 9,0 eingestellt. Der Feststoffgehalt der Dispersion beträgt 49,5 Gew.-% und die MFT 9°C.

### Beispiel 3

Zunächst wird eine Monomeremulsion hergestellt. Dazu wird eine Mischung aus

| | |
|---|---|
| 517,65 GT | Wasser, |
| 2,75 GT | Blanose 7 ULC®, |
| 39,3 GT | einer 38 %igen Lösung eines C₁₂ bis C₁₄ Alkylpolyglykolethersulfats mit ca. 3 Ethylenoxideinheiten und |
| 11,0 GT | Methacrylsäure |

mit einer 12,5 %igen Ammoniaklösung auf einen pH-Wert von 8 eingestellt und

| | |
|---|---|
| 572,0 GT | Methylmethacrylat, |
| 528,0 GT | Butylacrylat und |
| 2,75 GT | Ammoniumperoxodisulfat |

mit einem Schnellrührer eingerührt und so lange gerührt, bis eine stabile Emulsion entsteht. In einem geeigneten Reaktionsgefäß werden dann

| | |
|---|---|
| 522,5 GT | Wasser, |
| 1,1 GT | Blanose 7 ULC®, |
| 4,0 GT | einer 38 %igen Lösung eines C₁₂ bis C₁₄ Alkylpolyglykolethersulfats mit ca. 3 Ethylenoxideinheiten und |
| 66,0 GT | der Monomerenemulsion |

auf 80°C erhitzt und mit einer Lösung von 0,55 GT Ammoniumperoxodisulfat in 15 GT Wasser versetzt. Anschließend wird innerhalb von 3,5 Stunden die verbleibende Monomerenemulsion zudosiert. Es wird noch 60 Minuten weiter geheizt und dann abgekühlt. Der pH-Wert wird mit einer 12,5 %igen Ammoniaklösung auf 9,0 eingestellt. Der Feststoffgehalt der Dispersion beträgt 49,9 Gew.-% und die MFT 10°C.

### Beispiel 4

Zunächst wird eine Monomeremulsion hergestellt. Dazu wird eine Mischung aus

| | |
|---|---|
| 520,3 GT | Wasser, |
| 5,5 GT | Blanose 7 ULC®, |
| 39,3 GT | einer 38 %igen Lösung eines C₁₂ bis C₁₄ Alkylpolyglykolethersulfats mit ca. 3 Ethylenoxideinheiten und |
| 11,0 GT | Methacrylsäure |

mit einer 12,5 %igen Ammoniaklösung auf einen pH-Wert von 8 eingestellt und

| | |
|---|---|
| 572,0 GT | Methylmethacrylat, |
| 528,0 GT | Butylacrylat und |
| 2,75 GT | Ammoniumperoxodisulfat |

mit einem Schnellrührer eingerührt und so lange gerührt, bis eine stabile Emulsion entsteht. In einem geeigneten Reaktionsgefäß werden dann

| | |
|---|---|
| 522,50 GT | Wasser, |
| 1,1 GT | Blanose 7 ULC®, |
| 4,0 GT | einer 38%igen Lösung eines C₁₂ bis C₁₄ Alkylpolyglykolethersulfats mit ca. 3 Ethylenoxideinheiten und |
| 66,0 GT | der Monomerenemulsion |

auf 80°C erhitzt und mit einer Lösung von 0,55 GT Ammoniumperoxodisulfat in 15 GT Wasser versetzt. Anschließend wird innerhalb von 3,5 Stunden die verbleibende Monomerenemulsion zudosiert. Es wird noch 60 Minuten weiter geheizt und dann abgekühlt. Der pH-Wert wird mit einer 12,5 %igen Ammoniaklösung auf 9,0 eingestellt. Der Feststoffgehalt der Dispersion beträgt 49,9 Gew.-% und die MFT 13°C.

### Vergleichsbeispiel 5

Zunächst wird eine Monomeremulsion hergestellt. Dazu wird eine Mischung aus

| | |
|---|---|
| 512,7 GT | Wasser, |
| 39,3 GT | einer 38 %igen Lösung eines C₁₂ bis C₁₄ Alkylpolyglykolethersulfats mit ca. 3 Ethylenoxideinheiten und |
| 11,0 GT | Methacrylsäure |

hergestellt und

| | |
|---|---|
| 572,0 GT | Methylmethacrylat, |
| 528,0 GT | Butylacrylat und |
| 2,75 GT | Ammoniumperoxodisulfat |

mit einem Schnellrührer eingerührt und so lange gerührt, bis eine stabile Emulsion entsteht. In einem geeigneten Reaktionsgefäß werden dann

| | |
|---|---|
| 522,5 GT | Wasser, |
| 4,0 GT | einer 38 %igen Lösung eines C₁₂ bis C₁₄ Alkylpolyglykolethersulfats mit ca. 3 Ethylenoxideinheiten und |
| 66,0 GT | der Monomerenemulsion |

auf 80°C erhitzt und mit einer Lösung von 0,55 GT Ammoniumperoxodisulfatin 15 GT Wasser versetzt. Anschließend wird innerhalb von 3,5 Stunden die verbleibende Monomerenemulsion zudosiert. Es wird noch 60 Minuten weiter geheizt und dann abgekühlt. Der pH-Wert wird mit einer 12,5 %igen Ammoniaklösung auf 9,0 eingestellt. Der Feststoffgehalt der Dispersion beträgt 49,2 Gew.-% und die MFT 12°C.

### Vergleichsbeispiel 6

Zunächst wird eine Monomeremulsion hergestellt. Dazu wird eine Mischung aus

| | |
|---|---|
| 515,7 GT | Wasser, |
| 19,7 GT | einer 38 %igen Lösung eines C₁₂ bis C₁₄ Alkylpolyglykolethersulfats mit ca. 3 Ethylenoxideinheiten und |
| 11,0 GT | Methacrylsäure |

hergestellt und

| | |
|---|---|
| 572,0 GT | Methylmethacrylat, |
| 528,0 GT | Butylacrylat und |
| 2,75 GT | Ammoniumperoxodisulfat |

mit einem Schnellrührer eingerührt und so lange gerührt, bis eine stabile Emulsion entsteht. In einem geeigneten Reaktionsgefäß werden dann

| | |
|---|---|
| 522,5 GT | Wasser, |
| 19,7 GT | einer 38 %igen Lösung eines C₁₂ bis C₁₄ Alkylpolyglykolethersulfats mit ca. 3 Ethylenoxideinheiten und |
| 66,0 GT | der Monomerenemulsion |

auf 80°C erhitzt und mit einer Lösung von 0,55 GT Ammoniumperoxodisulfat in 15 GT Wasser versetzt. Anschließend wird innerhalb von 3,5 Stunden die verbleibende Monomerenemulsion zudosiert. Es wird noch 60 Minuten weiter geheizt und dann abgekühlt. Der pH-Wert wird mit einer 12,5 %igen Ammoniaklösung auf 9,0 eingestellt. Der Feststoffgehalt der Dispersion beträgt 50,4 Gew.-% und die MFT 10°C.

### Beispiel 7:

Um die Verträglichkeit gegenüber Zement zu prüfen werden in die Dispersionen gemäß den Beispielen 1 bis 4 sowie den Vergleichsbeispielen 5 und 6 jeweils 10 Gew.-% Zement bezogen auf die Dispersion eingerührt und beurteilt ob die Dispersion innerhalb von 8 Stunden stabil bleibt oder koaguliert.

| Dispersion | Befund Zementverträglichkeit |
|---|---|
| Dispersion gemäß Beispiel 1 | Dispersion ist stabil |
| Dispersion gemäß Beispiel 2 | Dispersion ist stabil |
| Dispersion gemäß Beispiel 3 | Dispersion ist stabil |
| Dispersion gemäß Beispiel 4 | Dispersion ist stabil |
| Dispersion gemäß Vergleichsbeispiel 5 | Dispersion koaguliert |
| Dispersion gemäß Vergleichsbeispiel 6 | Dispersion koaguliert |

### Beispiel 8:

Es wird eine Dachsteinfarbenpaste hergestellt in dem unter Rühren in

| | |
|---|---|
| 600 GT | Wasser |
| nacheinander | |
| 1200 GT | Calcit Füllstoff und |
| 300 GT | Eisenoxid Rot Pigment |

eingerührt werden.

Zur Herstellung einer Dachsteinfarbe werden zu jeweils 87,5 GT der Paste eine Mischung aus

| | |
|---|---|
| 120,0 GT | der Dispersion gemäß Beispiel 1 bis 6, |
| 3,8 GT | Butyldiglykol und |
| 1,0 GT | Silikonentschäumer |

gegeben, wobei in die Dispersion gemäß Beispiel 1 vor Herstellung der Farbe noch zusätzlich 0,6 GT einer neutralisierten Polyacrylsäure (Lopon 890®) als Dispergiermittel eingerührt wird.

Von den Farben wurde die Zementverträglichkeit und Wasseraufnahme bestimmt, sowie die Fleckenbildung auf Faserzementplatten unter Feuchtigkeitseinwirkung bei Wärme zur Simulation des Ausblühverhaltens getestet.

| Farbe auf Basis der Dispersion gemäß Beispiel: | Zementverträglichkeit der Farbe unter Zusatz von 10% Zement¹⁾ | Wasseraufnahme der Farbe in % ²⁾ | Fleckenbildung ³⁾ |
|---|---|---|---|
| 1 unter Zusatz von 0,6 GT Lopon 890® | Stabil | 7 | gering |
| 2 | Stabil | 12 | keine |
| 3 | Stabil | 6 | gering |
| 4 | Stabil | 6 | gering |
| Vergleichsbeispiel 5 | Farbe koaguliert | 7 | stark |
| Vergleichsbeispiel 6 | Farbe koaguliert | 6 | stark |

| | | | |
|---|---|---|---|
| ¹⁾ In die Dachsteinfarbe werden 10 % Zement gerührt und die Stabilität der Farbe anschließend beurteilt. | | | |
| ²⁾ Es wird ein 400 um dicker Farbfilm aufgerakelt und der Film bei 50°C im Trockenschrank über Nacht getrocknet. Anschließend wird die Wasseraufnahme bei 24 stündiger Lagerung in Wasser durch Differenzwägung ermittelt. | | | |
| ³⁾ Das Ausblühverhalten wird getestet, in dem ein 400µm dicker Farbfilm auf eine Faserzementplatte gerakelt wird, der Farbfilm über Nacht bei 50°C getrocknet wird und danach die Platte mit der beschichteten Seite eine Woche über ein 60°C warmes Wasserbad gelegt wird. Anschließend wird der Farbfilm bezüglich Fleckenbildung beurteilt. | | | |

## Patentansprüche

1. Verwendung einer Dispersion, die unter Verwendung von 0,1 bis 3 Gewichtsprozent (bezogen auf den Monomer-Gesamtgehalt) an Carboxymethylcellulose als Schutzkolloid nach dem Verfahren der Emulsionspolymerisation hergestellt wird, wobei man eine Mononomerzusammensetzung bestehend aus
a) 85 bis 99,8 Gew.-% Acrylsäureester mit C₁ bis C₁₂ Alkanolen, Methacrylsäureester mit C₁ bis C₁₂ Alkanolen und / oder vinylaromatischen Monomeren,
b) 0,2 bis 5 Gew.-% copolymerisierbaren Carbonsäuren, Carbonsäureamiden Sulfaten und/oder Sulfonaten und
c) 0 bis 10 Gew.-% sonstigen Monomeren
in Form einer wäßrigen Emulsion polymerisiert zur Herstellung von Dachsteinfarben.

2. Verwendung einer Dispersion gemäß Anspruch 1, **dadurch gekennzeichnet, daß** die Emulsionspolymerisation bei einem pH Wert > 3 durchgeführt wird.

3. Verwendung einer Dispersion gemäß Anspruch 1 oder 2, **dadurch gekennzeichnet, daß** als Schutzkolloid eine wasserlösliche Carboxymethylcellulose mit einem Substitutionsgrad von 0,4 bis 2,9 verwendet wird.

4. Verwendung einer Dispersion gemäß mindestens einem der vorhergehenden Ansprüche, **dadurch gekennzeichnet, daß** als Schutzkolloid eine wasserlösliche Carboxymethylcellulose verwendet wird, deren 2 %ige wäßrige Lösungen eine Brookfieldviskosität bei 25°C und 20 U/min von unter 2000 (mit Spindel 3) besitzen.

5. Verwendung einer Dispersion gemäß mindestens einem der vorhergehenden Ansprüche, **dadurch gekennzeichnet, daß** die Emulsionspolymerisation unter Verwendung von weniger als 1 Gew.-% eines Reglers durchgeführt wird.

6. Verwendung einer Dispersion gemäß mindestens einem der vorhergehenden Ansprüche, **dadurch gekennzeichnet, daß** die Dispersion 0,1 bis 2 Gew.-% eines Dispergiermittels enthält.

7. Dachsteinfarbe enthaltend eine Dispersion, die unter Verwendung von 0,1 bis 3 Gewichtsprozent (bezogen auf den Monomere-Gesamtgehalt) an Carboxymethylcellulose als Schutzkolloid nach dem Verfahren der Emulsionspolymerisation hergestellt wird, wobei man eine Mononomerzusammensetzung bestehend aus
a) 85 bis 99,8 Gew.-% Acrylsäureester mit C₁ bis C₁₂ Alkanolen, Methacrylsäureester mit C₁ bis C₁₂ Alkanolen und / oder vinylaromatischen Monomeren,
b) 0,2 bis 5 Gew.-% copolymerisierbaren Carbonsäuren, Carbonsäureamiden, Sulfaten und/oder Sulfonaten und
c) 0 bis 10 Gew.-% sonstigen Monomeren
in Form einer wäßrigen Emulsion polymerisiert.

8. Dachstein beschichtet mit einer Dachsteinfarbe gemäß Anspruch 7.

## Claims

1. The use of a dispersion prepared using from 0.1 to 3 percent by weight (based on the total monomer content) of carboxymethylcellulose as protective colloid in accordance with the method of emulsion polymerization, in connection with which a monomer composition comprising
a) from 85 to 99.8% by weight of acrylic esters with C₁ to C₁₂ alkanols, methacrylic esters with C₁ to C₁₂ alkanols and/or vinylaromatic monomers,
b) from 0.2 to 5% by weight of copolymerizable carboxylic acids, carboxamides, sulfates and/or sulfonates, and
c) from 0 to 10% by weight of other monomers
is polymerized in the form of an aqueous emulsion, for preparing roof tile paints.

2. The use of a dispersion as claimed in claim 1, wherein the emulsion polymerization is conducted at a pH > 3.

3. The use of a dispersion as claimed in claim 1 or 2, wherein a water-soluble carboxymethylcellulose having a degree of substitution of from 0.4 to 2.9 is used as protective colloid.

4. The use of a dispersion as claimed in at least one of the preceding claims, wherein said protective colloid is a water-soluble carboxymethylcellulose whose 2% strength aqueous solutions possess a Brookfield viscosity at 25°C and 20 rpm of less than 2000 (with spindle 3).

5. The use of a dispersion as claimed in at least one of the preceding claims, wherein the emulsion polymerization is conducted using less than 1% by weight of a regulator.

6. The use of a dispersion as claimed in at least one of the preceding claims, wherein the dispersion comprises from 0.1 to 2% by weight of a dispersant.

7. A roof tile paint comprising a dispersion prepared using from 0.1 to 3 percent by weight (based on the total monomer content) of carboxymethylcellulose as protective colloid in accordance with the method of emulsion polymerization, in connection with which a monomer composition comprising
a) from 85 to 99.8% by weight of acrylic esters with C₁ to C₁₂ alkanols, methacrylic esters with C₁ to C₁₂ alkanols and/or vinylaromatic monomers,
b) from 0.2 to 5% by weight of copolymerizable carboxylic acids, carboxamides, sulfates and/or sulfonates, and
c) from 0 to 10% by weight of other monomers
is polymerized in the form of an aqueous emulsion.

8. A roof tile coated with a roof tile paint as claimed in claim 7.

## Revendications

1. Utilisation d'une dispersion, qui est préparée en utilisant 0,1 à 3 pour cent en poids (par rapport à la teneur globale en monomères) de carboxyméthylcellulose comme colloïde protecteur selon le procédé de la polymérisation en émulsion, dans lequel on polymérise une composition de monomères constituée de
a) 85 à 99,8 % en poids d'esters d'acide acrylique avec des alcanols en C₁ à C₁₂, d'esters d'acide méthacrylique avec des alcanols en C₁ à C₁₂ et/ou de monomères aromatiques de vinyle,
b) 0,2 à 5% en poids d'acides carboxyliques, d'amides d'acide carboxylique, de sulfates et/ou de sulfonates copolymérisables et
c) 0 à 10 % en poids d'autres monomères
sous la forme d'une émulsion aqueuse pour la fabrication de colorants de pierres de toit.

2. Utilisation d'une dispersion selon la revendication 1, **caractérisée en ce que** la polymérisation en émulsion est réalisée à une valeur de pH > 3.

3. Utilisation d'une dispersion selon la revendication 1 ou 2, **caractérisée en ce qu'**on utilise comme colloïde protecteur une carboxyméthylcellulose hydrosoluble avec un degré de substitution de 0,4 à 2,9.

4. Utilisation d'une dispersion selon au moins une des revendications précédentes, **caractérisée en ce qu'**on utilise comme colloïde protecteur une carboxyméthylcellulose hydrosoluble, dont des solutions aqueuses à 2 % possèdent une viscosité Brookfield à 25°C de 20 tr/min de moins de 2000 (avec l'aiguille 3).

5. Utilisation d'une dispersion selon au moins une des revendications précédentes, **caractérisée en ce que** la polymérisation en émulsion est réalisée en utilisant moins de 1 % en poids d'un régulateur.

6. Utilisation d'une dispersion selon au moins une des revendications précédentes, **caractérisée en ce que** la dispersion contient 0,1 à 2% en poids d'un agent dispersant.

7. Colorant de pierres de toit contenant une dispersion, qui est préparée en utilisant 0,1 à 3 pour cent en poids (par rapport à la teneur globale en monomères) de carboxyméthylcellulose comme colloïde protecteur selon le procédé de la polymérisation en émulsion, dans lequel on polymérise une composition de monomères constituée de
a) 85 à 99,8 % en poids d'esters d'acide acrylique avec des alcanols en C₁ à C₁₂, d'esters d'acide méthacrylique avec des alcanols en C₁ à C₁₂ et/ou de monomères aromatiques de vinyle,
b) 0,2 à 5% en poids d'acides carboxyliques, d'amides d'acide carboxylique, de sulfates et/ou de sulfonates copolymérisables et
c) 0 à 10 % en poids d'autres monomères
sous la forme d'une émulsion aqueuse.

8. Pierre de toit revêtue avec un colorant de pierre de toit selon la revendication 7.
